Europäisches Patentamt

European Patent Office

Office européen des brevets

(11) Veröffentlichungsnummer : **0 065 207**
**B1**

(12) **EUROPÄISCHE PATENTSCHRIFT**

(45) Veröffentlichungstag der Patentschrift :
07.08.85

(51) Int. Cl.⁴ : **C 09 D  5/30, C 09 D  5/32,**
**C 09 D  5/38, B 05 D  5/00**

(21) Anmeldenummer : 82103854.4

(22) Anmeldetag : 05.05.82

(54) Verwendung von pigmentierten Anstrichstoffen mit vermindertem Emissionsvermögen im Spektralbereich der Wärmestrahlung für Infrarottarnungszwecke.

(30) Priorität : 08.05.81 DE 3118256

(43) Veröffentlichungstag der Anmeldung :
24.11.82 Patentblatt 82/47

(45) Bekanntmachung des Hinweises auf die Patenterteilung : 07.08.85 Patentblatt 85/32

(84) Benannte Vertragsstaaten :
AT BE CH FR GB IT LI NL SE

(56) Entgegenhaltungen :
AT-B- 357 248
US-A- 4 011 190
US-A- 4 289 677

(73) Patentinhaber : Herberts Gesellschaft mit beschränkter Haftung
Christbusch 25
D-5600 Wuppertal 2 (DE)

(72) Erfinder : Tschulena, Guido, Dr.
Reichenberger Strasse 5
D-6393 Wehrheim (DE)
Erfinder : Seiders, Mathias, Dr.
Liviushof 2
D-6233 Kelkheim (DE)
Erfinder : Ganson, Gertraud
Bommersheimer Strasse 37
D-6370 Oberursel (DE)
Erfinder : Heuel, Meinolf, Dipl.-Phys.
Schweriner Strasse 2
D-5400 Koblenz (DE)
Erfinder : Kurth, Herbert
Bonnstrasse 8
D-5030 Hürth (DE)
Erfinder : Faller, Fritz
Bachemer Strasse 249
D-5000 Köln 41 (DE)

(74) Vertreter : Türk, Dietmar, Dr. rer. nat. et al
Redies, Redies, Türk & Gille Patentanwälte Brucknerstrasse 20
D-4000 Düsseldorf 13 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von pigmentierten Anstrichstoffen mit vermindertem Emissionsvermögen im Spektralbereich der Wärmestrahlung für Infrarottarnungszwecke.

Der Wärmeausgleich zwischen einer heißen Oberfläche und ihrer Umgebung erfolgt bekanntlich durch Wärmeleitung, Wärmekonvektion und Wärmestrahlung. Bei vielen technischen Anwendungen, beispielsweise in Sonnenkollektoren, liefert die Wärmestrahlung schon bei verhältnismäßig kleinen Temperaturdifferenzen zwischen der Oberfläche und der Umgebung einen wesentlichen Beitrag zum Wärmetransport.

Die von einer Oberfläche durch Strahlung abgegebene Wärme hängt ab von der Temperaturdifferenz zwischen der Oberfläche und ihrer Umgebung und von ihrem materialabhängigen Emissionsvermögen, dessen Werte theoretisch zwischen 0 (keine Wärmeemission) und 1 (höchstmögliche Wärmeemission) liegen können.

Für viele Anwendungszwecke ist eine Oberfläche mit niedrigem Wärmeemissionsvermögen erwünscht, beispielsweise zur Herabsetzung der Energieverluste von warmen Rohrleitungen und zur Erzielung einer Reflexion von Wärmeabstrahlung an Wandungen hinter Heizkörpern. Wandbeschichtungen mit einer hohen Reflexion der Wärmestrahlung ergeben auch ein hohe thermische Behaglichkeitsempfindung bei nicht zu hohen Raumtemperaturen, was in Anbetracht der hierdurch erzielten Einsparungen an Heizenergie von großer Bedeutung ist. Lacke mit speziell eingestelltem Emissionsvermögen können ferner zu Markierungszwecken, beispielsweise zur Erkennung mit einem Infrarot-Suchgerät, eingesetzt werden. Lacke mit niedrigem Emissionsvermögen für Wärmestrahlung sind auch für militärische Tarnungszwecke gegen Infrarotaufklärung einsetzbar.

Die bekannten Lackzusammensetzungen, beispielsweise diejenigen auf Basis von Alkydharzen oder Polyurethanen, bestehen im wesentlichen aus Binde- und Lösungsmittel, Pigmenten und verschiedenen Additiven. Die Farbe dieser Lacke wird im sichtbaren Spektralbereich durch die Pigmentzusammensetzung bestimmt. Im infraroten Spektralbereich, insbesondere im Bereich der Wärmestrahlung mit Wellenlängen zwischen etwa 2 000 und etwa 3 000 nm, werden dagegen die optischen Eigenschaften der Lacke im wesentlichen durch die Bindemitteleigenschaften bestimmt. Praktisch alle bekannten Lacksorten besitzen ein hohes Emissionsvermögen für Infrarotstrahlung von 0,85 bis 0,95.

Das gilt auch für die aus US-A-4 011 190 und AT-B-357 248 bekannten Anstriche für die Absorption von Solarenergie, die scharze Metallteilchen mit einem dünnen Film aus Halbleitern aufweisen. Im letzteren Falle müssen zwei Schichten aufgetragen werden, eine untere aufhellende erste Schicht sowie eine obere, die Sonnenenergie absorbierende zweite Schicht.

Das Aufbringen von Lackschichten stellt jedoch eine sehr kostengünstige Methode dar, um Oberflächen die gewünschten Eigenschaften, wie z. B. Antikorrosionseigenschaften, zu verleihen. Bisher gab es keine pigmentierten Lacke, die gleichzeitig eine Reduzierung des Wärmeemissionsvermögens bewirken.

Bekannt sind lediglich sogenannte « Ofenlacke », die ein niedriges Infrarot-Emissionsvermögen von etwa 0,25 aufweisen. Sie enthalten einen extrem hohen Aluminiumpigmentanteil und sind nur in silbriger Farbe erhältlich. Sie wurden in erster Linie entwickelt, um temperaturstabile Anstriche zur Verfügung zu haben.

Zur Erzielung eines niedrigen Infrarotemissionsvermögens können auch infrarotreflektierende Metallanstriche unter infrarottransparenten Lackanstrichen verwendet werden. Die Lackbindemittel absorbieren jedoch im infraroten Bereich und erfüllen damit die Transparenzanforderungen nicht. Um diese zu erfüllen, müßten extrem dünne Lackschichten eingesetzt werden, die aber wiederum keine ausreichende mechanische Stabilität besitzen : Es treten Kratz- und Abriebsprobleme auf.

Es sind auch Beschichtungen bekannt, die im sichtbaren Bereich transparent sind und im infraroten Bereich reflektieren, beispielsweise solche aus Indium- oder Goldfilmen in einer Dicke von wenigen nm. Der Nachteil dieser Anstriche besteht darin, daß die Erzielung derart dünner Schichten sehr schwierig ist. Auch können unterschiedliche Farbtöne im sichtbaren Bereich dadurch nicht realisiert werden.

Gegenstand der Erfindung ist die Verwendung von pigmentierten Anstrichstoffen mit vermindertem Emissionsvermögen im Spektralbereich der Wärmestrahlung und in unterschiedlichen Farbeigenschaften, die 1 bis 70 Gew.%, vorzugsweise 3 bis 30 Gew.% Aluminium-Metallpigment enthalten, für Infrarottarnungszwecke.

Das Aluminium-Metallpigment liegt in den erfindungsgemäß verwendeten pigmentierten Anstrichstoffen vorzugsweise in Form von Blättchen, Stäbchen oder Kugeln vor, wovon Blättchen besonders bevorzugt sind. Das Aluminium-Metallpigment sollte vorzugsweise Abmessungen von etwa 0,1 bis etwa 100 μm haben. Bei Verwendung von blättchenförmigen bzw. stäbchenförmigen Aluminium-Metallpigmenten sollte ein großes Durchmesser/Dicken-Verhältnis bzw. ein großes Durchmesser/Längen-Verhältnis gegeben sein. Blättchenförmige Aluminium-Metallpigmente haben vorzugsweise eine Dicke von 0,1 bis 10 μm, insbesondere von 1 μm, bei einem mittleren Durchmesser von 1 bis 100 μm. Stäbchenförmige Aluminium-Metallpigmente haben vorzugsweise einen Durchmesser von 0,1 bis 10 μm und eine Länge von 1 bis 100 μm. Bei kugelförmigen Aluminium-Metallpigmenten beträgt der mittlere Pigmentdurchmesser vorzugsweise etwa 1 bis etwa 100 μm. Zur Erzielung grauer und olivfarbener Farbtöne werden vorzugsweise blättchenförmige Aluminium-Metallpigmente verwendet, und zwar solche mit Abmessungen von 5 bis 20 μm, vorzugsweise von 10 μm, zur Erzielung grauer Farbtöne, und solche mit Abmessungen von 10 bis 80 μm, vorzugsweise von 40 bis 50 μm, zur Erzielung bunter, beispielsweise olivfarbener, Farbtöne.

Die Erfindung beruht auf der Erkenntnis, daß pigmentierte Anstrichstoffe (Lacke) mit einem verminderten Emissionsvermögen im Spektralbereich der Wärmestrahlung erhalten werden können, wenn ihnen Aluminium-Metallpigmente einer speziellen Form und Konzentration zugesetzt werden. Das erwünschte niedrige Infrarot-Emissionsvermögen ist mit einer hohen elektrischen Leitfähigkeit des Aluminium-Metallpigments verknüpft. Dabei wurde festgestellt, daß das Emissionsvermögen mit steigendem Volumen- bzw. Gewichtsanteil des Aluminium-Metallpigments sinkt. So erreicht beispielsweise bei einem Aluminium-Metallpigmentgehalt von 30 Gew.% im ausgehärteten Polyurethanlack die Verringerung des Emissionsvermögens einen Sättigungswert. Auch wurde festgestellt, daß die Pigmentform einen großen Einfluß auf die Herabsetzung des Emissionsvermögens hat. Ein starker Effekt ist bei schuppenförmigen Aluminium-Metallplättchen zu beobachten, gefolgt von stäbchenförmigen und kugelförmigen Aluminium-Metallpigmenten. Schuppenförmige Aluminium-Metallplättchen werden heute allgemein in Lacken zur Erzielung eines Metallglanzeffektes verwendet. Stark anisotrope Pigmentformen zeigen dabei eine starke Herabsetzung des Emissionsvermögens, d. h. blättchenförmige oder schuppenförmige und stäbchenförmige Pigmente weisen ein niedrigeres Emissionsvermögen auf als kugelförmige Pigmente.

Untersuchungen haben zwar gezeigt, daß die Herabsetzung des Emissionsvermögens praktisch unabhängig von der Pigmentgröße innerhalb des Größenbereiches von etwa 1 bis etwa 100 μm (mittlerer Pigmentdurchmesser) ist, für das Farbverhalten und den Glanz der Lacke ist die Größe der Pigmentteilchen jedoch von großer Bedeutung. Wenn graue, matte Lacke erzielt werden sollen, erweisen sich Aluminium-Metallpigmente mit einem Durchmesser von 5 bis 20 μm, vorzugsweise von 10 μm Durchmesser, als besonders geeignet in den erfindungsgemäß verwendeten pigmentierten Anstrichstoffen, während für glänzende Buntlacke Aluminium-Metallpigmente mit einem Durchmesser von 10 bis 100 μm, vorzugsweise von 40 bis 50 μm, besonders vorteilhaft sind.

Gemäß einem weiteren Gegenstand der Erfindung werden zu Infrarot-Tarnungszwecken pigmentierte Anstrichstoffe der vorstehend beschriebenen Art mit stäbchenförmigen Aluminium-Metallpigmenten verwendet, wobei sie so aufgetragen werden, daß eine Vorzugsorientierung bzw. eine starke Ausrichtung der Pigmentanteile erzielt wird. Dadurch wird erreicht, daß die emittierte Wärmestrahlung polarisiert ist. Die erfindungsgemäß verwendeten pigmentierten Anstrichstoffe können aber auch so auf die zu beschichtende Oberfläche aufgebracht werden, daß viele kleine Flächen mit unterschiedlicher Polarisationsrichtung der Wärmestrahlung erhalten werden, obgleich die Gesamtfläche homogen aussieht.

Die Erfindung wird nachstehend anhand von Beispielen näher erläutert.

Beispiel 1

Zu einem handelsüblichen farblosen Polyurethan-Grundlack wurden 10 bis 20 Gew.% (bezogen auf die Gesamtzusammensetzung) eines blättchenförmigen, lamellenartigen Aluminium-Metallpigments mit einem mittleren Durchmesser von 10 μm und einige Prozent Schwarzpigment auf Rußbasis zugemischt. Man erhielt einen Graulack vom Farbton RAL 7 000 mit einem verminderten Emissionsvermögen für Wärmestrahlung von etwa 0,5 gegenüber einem solchen von 0,9 eines normalen Graulacks vom Farbton RAL 7 000.

Beispiel 2

Zu einem handelsüblichen Alkydharzlack von gelboliver Farbe wurden 20 bis 30 Gew.%, bezogen auf die Gesamtzusammensetzung, eines blättchenförmigen, lamellaren Aluminium-Metallpigments mit einem mittleren Durchmesser von 50 μm und einige Prozent Farbpigmente im Farbton RAL 6 015 zugemischt. Dabei erhielt man einen Lack des Farbtons RAL 6 014 mit einem verminderten Infrarot-Emissionsvermögen von etwa 0,6.

## Patentansprüche

1. Verwendung von pigmentierten Anstrichstoffen mit vermindertem Emissionsvermögen im Spektralbereich der Wärmestrahlung und in unterschiedlichen Farbeigenschaften, die 1 bis 70 Gew.% Aluminium-Metallpigment enthalten, für Infrarottarnungszwecke.

2. Verwendung nach Anspruch 1, dadurch gekennzeichnet, daß der Aluminium-Metallpigmentgehalt der pigmentierten Anstrichstoffe 3 bis 30 Gew.% beträgt.

3. Verwendung nach Anspruch 1 oder 2, dadurch gekennzeichnet, daß das Aluminium-Metallpigment in den pigmentierten Anstrichstoffen in Form von Blättchen, Stäbchen oder Kugeln, insbesondere in Form von Blättchen, vorliegt.

4. Verwendung nach einem der Ansprüche 1 bis 3, dadurch gekennzeichnet, daß das Aluminium-Metallpigment in den pigmentierten Anstrichstoffen Abmessungen von 0,1 bis 100 μm aufweist, wobei Blättchen vorzugsweise ein großes Durchmesser/Dicken-Verhältnis und Stäbchen vorzugsweise ein großes Durchmesser/Längen-Verhältnis aufweisen.

5. Verwendung nach Anspruch 4, dadurch gekennzeichnet, daß zur Erzielung grauer Farbtöne ein blättchenförmiges Aluminium-Metallpigment mit einem Durchmesser von 5 bis 20 μm, vorzugsweise von 10 μm, und zur Erzielung bunter Farbtöne ein blättchenförmiges Aluminium-Metallpigment mit einem Durchmesser von 10 bis 80 μm, vorzugsweise von 40 bis 50 μm, verwendet werden.

6. Verwendung nach Anspruch 5, dadurch gekennzeichnet, daß ein blättchenförmiges Aluminium-Metallpigment mit einer Dicke von 0,1 bis 10 μm, vorzugsweise von 1 μm, verwendet wird.

7. Verwendung nach einem der Ansprüche 1 bis 4, dadurch gekennzeichnet, daß es sich bei dem Aluminium-Metallpigment in den pigmentierten Anstrichstoffen um ein stäbchenförmiges Aluminium-Metallpigment mit einem Durchmesser von 0,1 bis 10 μm und einer Länge von 1 bis 100 μm handelt.

8. Verwendung der pigmentierten Anstrichstoffe mit einem stäbchenförmigen Aluminium-Metallpigment nach einem der Ansprüche 3, 4 und 7, dadurch gekennzeichnet, daß durch die Art der Auftragung eine Vorzugsorientierung bzw. eine starke Ausrichtung der Pigmentanteile erzielt wird, so daß die emittierte Wärmestrahlung polarisiert ist.

9. Verwendung nach Anspruch 8, dadurch gekennzeichnet, daß der pigmentierte Anstrichstoff mit unterschiedlicher Orientierung der Pigmentanteile auf viele kleine Flächen aufgetragen wird, so daß die Gesamtfläche in viele kleine Flächen mit unterschiedlicher Polarisationsrichtung der Wärmestrahlung aufgeteilt wird.

## Claims

1. Use of pigmented coating compounds with reduced emission capability in the spectral range of heat radiation and with differing colour properties, which contain 1 to 70 % by weight of aluminium metal pigment, for infared camouflage purposes.

2. Use according to claim 1, characterised in that the aluminium metal pigment content of the pigmented coating compounds is from 3 to 30 % by weight.

3. Use according to claim 1 or 2, characterised in that the aluminium metal pigment is present in the pigmented coating compounds in the form of flakes, small rods or beads, in particular in the form of flakes.

4. Use according to one of claims 1 to 3, characterised in that the aluminium metal pigment in the pigmented coating compounds has dimensions of from 0.1 to 100 μm, flakes preferably having a high diameter to thickness ratio and rods preferably having a high diameter to length ratio.

5. Use according to claim 4, characterised in that a flake-form aluminium metal pigment having a diameter of from 5 to 20 μm, preferably 10 μm, is used for obtaining grey shades and a flake-form aluminium metal pigment having a diameter of from 10 to 80 μm, preferably from 40 to 50 μm, is used for obtaining bright shades.

6. Use according to claim 5, characterised in that a flake-form aluminium metal pigment having a thickness of from 0.1 to 10 μm, preferably 1 μm, is used.

7. Use according to one of claims 1 to 4, characterised in that the aluminium metal pigment in the pigmented coating compounds is a small-rod-shaped aluminium metal pigment having a diameter of from 0.1 to 10 μm and a length of from 1 to 100 μm.

8. Use of the pigmented coating compounds containing a small-rod-shaped aluminium metal pigment according to one of claims 3, 4 and 7, characterised in that a preferred orientation or strong alignment of pigment fractions is achieved by the method of application, so that the heat radiation emitted is polarized.

9. Use according to claim 8, characterised in that the pigmented coating compound with differing orientation of the pigment particles is applied to many small surfaces, so that the total surface is divided into many small surfaces with differing directions of polarization of heat radiation.

## Revendications

1. Utilisation de produits de revêtement pigmentés à pouvoir émissif réduit dans le domaine spectral du rayonnement thermique et avec des propriétés de couleur différentes, qui contiennent de 1 à 70 % en poids de pigment d'aluminium métallique dans des buts de camouflage à l'infrarouge.

2. Utilisation selon la revendication 1, caractérisée en ce que la teneur en pigment d'aluminium métallique des produits de revêtement pigmentés est de 3 à 30 % en poids.

3. Utilisation selon la revendication 1 ou 2, caractérisée en ce que le pigment d'aluminium métallique contenu dans les produits de revêtement pigmentés est sous forme de tablettes, de bâtonnets ou de billes, plus particulièrement sous forme de tablettes.

4. Utilisation selon l'une des revendications 1 à 3, caractérisée en ce que le pigment d'aluminium métallique contenu dans les produits de revêtement pigmentés présente des dimensions de 0,1 à 100 microns, les tablettes présentant de préférence un fort rapport diamètre/épaisseur et les bâtonnets de préférence un fort rapport diamètre/longueur.

5. Utilisation selon la revendication 4, caractérisée en ce que, pour parvenir à des nuances grises, on utilise un pigment d'aluminium métallique sous forme de tablettes à un diamètre de 5 à 20 microns, de préférence de 10 microns, et pour parvenir à des nuances colorées, on utilise un pigment d'aluminium métallique sous forme de tablettes à un diamètre de 10 à 80 microns, de préférence de 40 à 50 microns.

6. Utilisation selon la revendication 5, caractérisée en ce que l'on utilise un pigment d'aluminium métallique sous forme de tablettes à une épaisseur de 0,1 à 10 microns, de préférence de 1 micron.

7. Utilisation selon l'une des revendications 1 à 4, caractérisée en ce que le pigment d'aluminium métallique contenu dans les produits de revêtement pigmentés est un pigment d'aluminium métallique sous forme de bâtonnets à un diamètre de 0,1 à 10 microns et une longueur de 1 à 100 microns.

8. Utilisation des produits de revêtement pigmentés contenant un pigment d'aluminium métallique sous forme de bâtonnets selon l'une des revendications 3, 4 et 7, caractérisée en ce que, par le mode d'application, on provoque une orientation préférentielle ou une forte mise en direction du pigment, de sorte que le rayonnement thermique émis est polarisé.

9. Utilisation selon la revendication 8, caractérisée en ce que le produit de revêtement pigmenté à orientation variable du pigment est appliqué sur de nombreuses petites surfaces, de sorte que la surface globale est subdivisée en de nombreuses petites surfaces dans lesquelles la direction de polarisation du rayonnement thermique est différente.